Europäisches Patentamt

European Patent Office

Office européen des brevets

(19)

(11) Veröffentlichungsnummer: **0 025 084**
**B1**

(12)

# EUROPÄISCHE PATENTSCHRIFT

(45) Veröffentlichungstag der Patentschrift:
**18.05.83**

(51) Int. Cl.³: **B 29 D 27/04**

(21) Anmeldenummer: **80103107.1**

(22) Anmeldetag: **04.06.80**

(54) Einrichtung zum kontinuierlichen Herstellen von Schaumstoffblöcken oder Schaumstoffbahnen.

(30) Priorität: **15.06.79 DE 2924183**

(43) Veröffentlichungstag der Anmeldung:
**18.03.81 Patentblatt 81/11**

(45) Bekanntmachung des Hinweises auf die Patenterteilung:
**18.05.83 Patentblatt 83/20**

(84) Benannte Vertragsstaaten:
**AT BE CH DE FR GB IT LI NL**

(56) Entgegenhaltungen:

**DE-C-842 267**
**US-A-3 007 200**
**US-A-3 111 709**
**US-A-3 553 300**
**US-A-3 895 086**

(73) Patentinhaber: **BAYER AG, Zentralbereich Patente, Marken und Lizenzen, D-5090 Leverkusen 1, Bayerwerk (DE)**

(72) Erfinder: **Hoffmann, Erwin, Martin-Buber-Strasse 47, D-5090 Leverkusen 3 (DE)**
Erfinder: **Dietrich, Werner, Dr., Fürvelser Strasse 25, D-5000 Köln 80 (DE)**
Erfinder: **Kraft, Karl Josef, Dr., Heymannstrasse 38, D-5090 Leverkusen (DE)**

Einrichtung zum kontinuierlichen Herstellen von Schaumstoffblöcken oder Schaumstoffbahnen

Die Erfindung richtet sich auf eine Einrichtung zum kontinuierlichen Herstellen von Schaumstoffblöcken oder Schaumstoffbahnen, die gegebenenfalls mit Deckschichten kaschiert sind, aus einem flüssigen Reaktionsgemisch; bestehend aus

a)	einer Förderfläche für den sich bildenden Schaumstoffkörper, über der einlaufseitig

ba)	ein gegenüber der Förderfläche geneigter Aufgabetisch und

bb)	ein Querverteilorgan für das flüssige Reaktionsgemisch vorgesehen sind, und einer über dem Aufgabetisch angeordneten

c)	Gemischaufgabevorrichtung.

Im Falle der Herstellung von Platten oder relativ dünnen Schaumstoffbahnen bzw. Sandwichplatten weist die Einrichtung in aller Regel noch ein oberes Transportband auf und ist in der Fachwelt unter dem Begriff «Doppeltransportband» bekannt (US-A-3 007 200). In erster Linie bezieht sich die Erfindung auf solche Doppeltransportbänder, weil dort das flüssige Reaktionsgemisch über die Arbeitsbreite in einer besonders dünnen und gleichmässigen Schicht aufgetragen werden muss, um ein einwandfreies Endprodukt zu erzielen. Sie ist aber auch beim kontinuierlichen Blockschäumen anwendbar.

Bei den bekannten Einrichtungen dieser Art ist hinter dem Aufgabetisch, in Förderrichtung gesehen, als Querverteilorgan z.B. eine Walze oder ein Rakel vorgesehen. Die untere Deckschicht kann, wenn sie anschmiegsam ist, über den Aufgabetisch geführt sein. Dabei wird darauf geachtet, dass sie in der Knickstelle zwischen Aufgabetisch und Transportband anliegt.

Sie kann aber auch unter dem Aufgabetisch hergeführt werden. Von dieser Möglichkeit wird insbesondere bei der Verwendung steifer oder starrer Schichten Gebrauch gemacht. In diesem Falle ist der Aufgabetisch vorzugsweise mit eine Schicht aus Polytetrafluorethylen oder Silikon überzogen, um das Anhaften des Gemisches zu vermeiden. Rein theoretisch liessen sich alle mit dem Reaktionsgemisch bzw. dem sich bildenden Schaumstoff in Berührung kommenden Maschinenteile mit einem solchen Überzug versehen. In der Praxis hat sich jedoch die Verwendung von Deckschichten, insbesondere von Papierbahnen, als sicherer und sinnvoller erwiesen.

Die Problematik solcher Einrichtungen liegt darin, dass das auf den Aufgabetisch aufgegebene Reaktionsgemisch sich oft nicht rechtzeitig über die gesamte Breite verteilen kann, bevor die Reaktion einsetzt. Zu den Seiten hin beginnt das Reaktionsgemisch wegen des weiteren Fliessweges bereits vor dem Passieren die Egalisiervorrichtung aufzuschäumen. Dadurch entstehen ungleichmässige Randzonen durch mangelhaftes und ungleichmässiges Ausfüllen des Querschnittes und/oder es bilden sich Schlieren.

Es liegt der Erfindung deshalb die Aufgabe zugrunde, den Gemischauftrag der flüssigen Reaktionsgemisches über die Arbeitsbreite so zu verbessern, dass ein einwandfreies Endprodukt, das gut ausgebildete Randzonen und homogene Schaumdichte aufweist, gewährleistet ist.

Dies wird gemäss der Erfindung dadurch erreicht, dass das Querverteilorgan

da)	über dem geneigten Aufgabetisch angeordnet ist und

db)	mit dessen Oberfläche einen Spalt bildet.

Es wurde überraschenderweise gefunden, dass diese Massnahme die Querverteilung ausserordentlich begünstigt. Zum einen wird das aus dem Auslass der Mischvorrichtung mit einem gewissen Druck ausströmende Gemisch von dem Querverteilorgan gestaut und sofort nach den Seiten verteilt. Der Verteileffekt ist um so grösser, je höher die Ausströmungsgeschwindigkeit aus dem Mischkopf ist und je günstiger der Neigungswinkel des Aufgabetisches ist. Dank dieser Massnahme lassen sich auch schnell reagierende Gemische verarbeiten. Je nach dem Grade der Reaktionsfähigkeit kann es vorteilhaft sein, wenn der Abstand zwischen Querverteilorgan und Knickstelle relativ gross ist. Dadurch kann man ein gewisses Stabilisieren des Auftrags erreichen. Andererseits darf aber die Strecke nicht zu lang sein, insbesondere wenn der Neigungswinkel des Aufgabetisches gross ist, damit kein Aufschieben oder Überwälzen stattfindet.

Nach einer weiteren besonderen Ausführungsform der erfindungsgemässen Einrichtung besitzt der zwischen Querverteilorgan und Aufgabetisch gebildete Spalt über die Breite gesehen unterschiedliche Weite. Dabei ist der Spalt in Förderrichtung hinter der Aufgabestelle enger und wird zu den Seiten zu breiter. Besteht das Querverteilorgan aus einer Walze, so ist diese entsprechend ballig ausgeführt, besteht es aus einer Kufe oder einem Rakel, so ist dessen zum Aufgabetisch weisende Fläche entsprechend zu konturieren.

Alternativ hierzu oder auch in Kombination ist der Aufgabetisch von der Aufgabestelle zu den Rändern hin entsprechend gewölbt.

Vorzugsweise ist die Spaltweite über die Breite gesehen unterschiedlich einstellbar. Dadurch kann man auf die praktischen Gegebenheiten am besten Einfluss nehmen.

Es liegt auf der Hand, dass die Spaltweite auch insgesamt einstellbar ist und dass das Querverteilorgan vorzugsweise entlang dem Aufgabetisch verschiebbar ist; vorzugsweise parallel zur Neigungsfläche des Aufgabetisches.

Wird keine obere Deckfolie benutzt. ist das Querverteilorgan mit einer antiadhäsiven Schicht, wie PTFE oder Silikon überzogen.

Da in der Praxis jedoch nahezu ausschliesslich mit einer oberen Deckfolie gearbeitet wird, lässt sich diese in der üblichen Weise über das Querverteilorgan mit durch den Spalt führen. Damit die obere Deckfolie hinter dem Querverteilorgan nicht wieder abgehoben wird, ist eine Folienführung vorgesehen, die sich mindestens bis zur Knickstelle zwischen Aufgabetisch und Transportband erstreckt. Diese Führung kann in der verschiedensten Weise ausgeführt sein.

Nach einer ersten Variante kann etwa in der Knickstelle eine Bahnführungswalze vorgesehen sein, deren Spalt zur Knickstelle bzw. zum Aufgabetisch und/oder zum Transportband einstellbar ist. Dabei kann die Fläche zwischen Querverteilorgan und Umlenkorgan in vorteilhafter Weise durch eine Platte ausgefüllt sein, um die Deckfolie abzustützen. Wenn das Querverteilorgan als Walze ausgebildet ist, kann auch ein über beide Walzen umlaufendes Band vorgesehen sein. Dabei ist eine der Walzen vorzugsweise antreibbar, wobei die Transportgeschwindigkeit mit der Transportgeschwindigkeit des Unterbandes synchronisiert ist.

Nach einer weiteren Ausführungsform ist die Führung mit dem Querverteilorgan vereinigt, indem dieses bis mindestens herab zur Knickstelle reicht.

Vorzugsweise bildet das Querverteilorgan zusammen mit der Führung insofern eine Einheit, als diese als Ganzes verstellbar ist. Die Verteilbarkeit ist in Richtung senkrecht zum Aufgabetisch möglich, sie ist aber vorzugsweise auch durch Schwenken um die Achse des Querverteilorgans oder um diejenige der in der Knickstelle angeordneten Umlenkwalze möglich, um einen sich in Förderrichtung verjüngenden oder erweiternden Spalt einstellen zu können.

In einer Zeichnung ist der Einlauf der erfindungsgemässen Einrichtung in mehreren Ausführungsbeispielen rein schematisch dargestellt und nachstehend näher erläutert. Es zeigen:

Fig. 1 den Einlauf nach einem ersten Ausführungsbeispiel in der Seitenansicht,

Fig. 2 den Einlauf nach einem zweiten Ausführungsbeispiel in der Seitenansicht und

Fig. 3 die Einrichtung nach einem dritten Ausführungsbeispiel in der Seitenansicht.

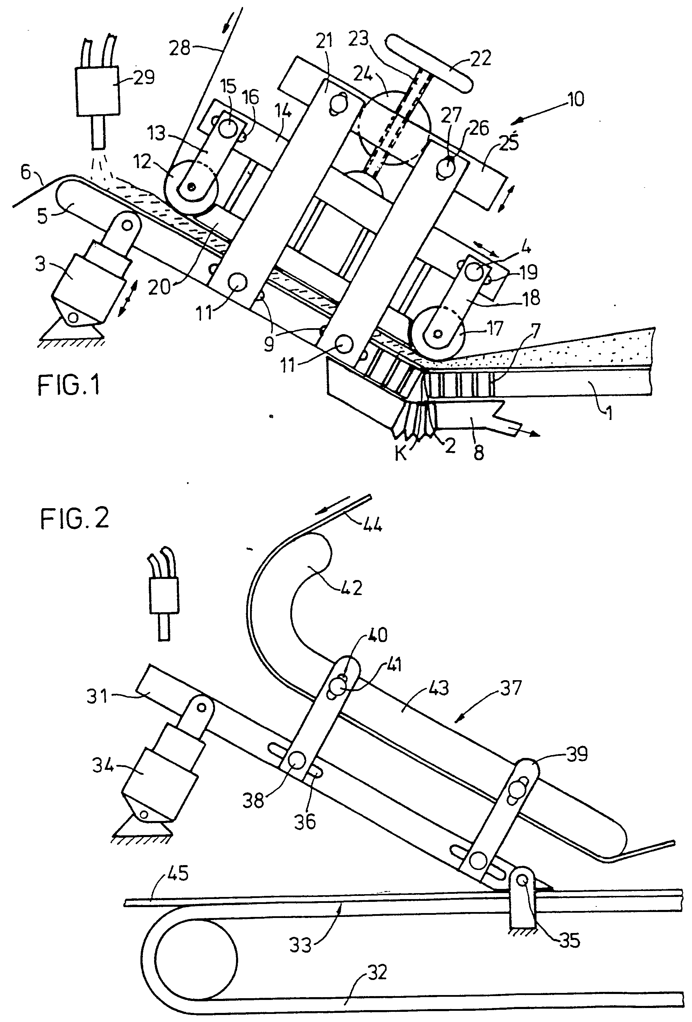

In Fig. 1 ist von der eigentlichen Einrichtung lediglich der als Förderfläche 1 vorgeordnete Gleittisch ersichtlich. Ihm vorgelagert ist ein um die Achse 2 mittels der verstellbaren Stütze 3 schwenkbarer Aufgabetisch 5. Über ihn ist eine untere Deckschicht 6 geführt, die in der zwischen Aufgabetisch 5 und Gleittisch 1 gebildeten Knickstelle K mittels Saugluft zum Anliegen gebracht wird. Hierzu ist im Bereich der Knickstelle K unterhalb des Aufgabetisches 5 und der Förderfläche 1, die beide Perforationen 7 aufweisen, ein Saugkasten 8 angeordnet. Im Aufgabetisch 5 sind seitlich Führungsschlitze 9 vorgesehen, in denen eine Folienführungsvorrichtung 10 längsverschiebbar und mittels Klemmschrauben 11 fixierbar geführt ist. Diese umfasst ein als Walze ausgebildetes Querverteilorgan 12, dessen Lagerschilder 13 in einem Basiskörper 14 mittels Klemmschrauben 15 in Längsschlitzen 16 fixierbar gelagert sind. Am anderen Ende des Basiskörpers 14 ist über der Knickstelle K eine Bahnführungswalze 17 vorgesehen. Ihre Lagerschilder 18 sind ebenfalls in Längsschlitzen 19 verschiebbar und mittels Klemmschrauben 4 feststellbar gelagert. Zwischen dem Querverteilorgan 12 und der Umlenkwalze 17 ist eine austauschbare Führungsplatte 20 vorgesehen, die ebenfalls am Basiskörper 14 gehalten ist. Soll der Abstand zwischen Querverteilorgan 12 und Umlenkwalze 17 verändert werden, so wird eine in der Länge entsprechende passende Führungsplatte 20 eingesetzt. Der Basiskörper 14 ist zwischen den Seitenteilen 21 geführt und an einer mittels eines Handrades 22 betätigbaren Spindel 23 aufgehängt. Diese ist in einem Schwenkstück 24 gelagert, welches in einer Grundplatte 25 geführt ist. Diese ist in den Seitenteilen 21 höhenverstellbar in Schlitzen 26 und mit Klemmschrauben 27 fixierbar geführt. Über das Verteilorgan 12, die Führungsplatte 20 und die Umlenkwalze 17 ist eine obere Deckschicht 28 geleitet. der Mischkopf ist mit 29 bezeichnet. Durch diese Konstruktion lässt sich die Folienführungseinrichtung 10 so einstellen, dass sie mit dem Aufgabetisch 5 einen Spalt gewünschter Dicke und gegebenenfalls gewünschter Verjüngung oder Erweiterung bildet.

In Fig. 2 ist der Aufgabetisch 31 über dem Transportband 32 angeordnet, dessen Obertrum als Förderfläche 33 dient. Der Aufgabetisch 31 ist mittels einer verstellbaren Stütze 34 um die Achse 35 schwenkbar, so dass seine Neigung einstellbar ist. In seitlichen Längsschlitzen 36 ist eine Folienführungsvorrichtung 37 längsverschiebbar geführt und mittels Klemmschrauben 38 feststellbar. Sie besteht aus Seitenteilen 39, die zum Aufgabetisch 31 senkrecht gerichtete Schlitze 40 aufweisen. In ihnen ist mittels Klemmschrauben 41 ein Querverteilorgan 42 gehalten, das als Kufe ausgeführt ist. Es besitzt einen solch langen Bahnführungsfortsatz 43, dass sein hinteres Ende als Umlenkorgan für die obere Deckschicht 44 dient. Benötigt man ein kürzeres oder längeres Folienführungsorgan, so lässt sich dieses Teil leicht gegen ein anderes austauschen. Alternativ ist der Fortsatz teleskopartig zusammenschiebbar ausgebildet. Die Konstruktion lässt jede gewünschte Einstellbarkeit des Spaltes zwischen Aufgabetisch 31 und Folienführungsvorrichtung 37 zu. Die untere Deckschicht 45 ist steif. Deshalb ist sie unter dem Aufgabetisch 31, der mit einer Silikonschicht überzogen ist, hergeführt.

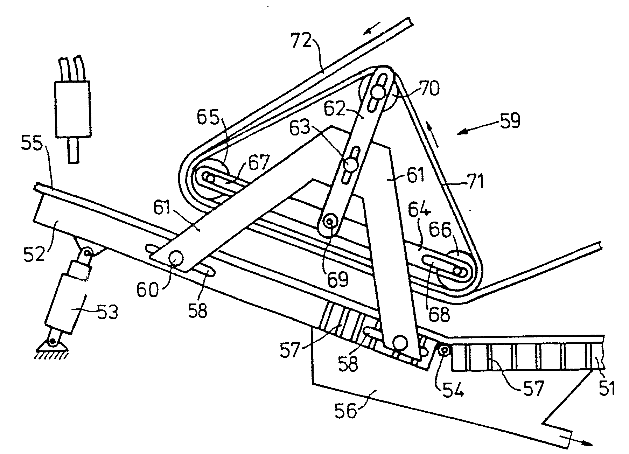

In Fig. 3 ist dem als Förderfläche 51 dienenden Gleittisch ein geneigter Aufgabetisch 52 vorgeordnet. Er ist mittels einer Stütze 53 in seiner Neigung verstellbar und dabei um die Achse 54 schwenkbar. Über den Aufgabetisch 52 und die Förderfläche 51 ist eine untere Deckschicht 55 geführt. In der Knickstelle zwischen Aufgabetisch 52 und Förderfläche 51 wird sie durch Saugkraft zum Anliegen gebracht. Hierzu ist ein Saugkasten 56 unterhalb des Aufgabetisch 52 und der Förderfläche 51 angeordnet. Der Aufgabetisch 52 sowie die Förderfläche 51 weisen im Bereich des Saugkastens 56 Durchbrüche 57 auf. Im Aufgabetisch 52 sind seitlich Längsschlize 58 vorgesehen, in denen eine Folienführungsvorrichtung 59 verstellbar und mittels Klemmschrauben 60 fixierbar gehalten ist. Sie besteht aus Seitenteilen 61, an denen jeweils ein senkrecht zum Aufgabetisch 52 verschiebbares Tragstück 62 mittels Klemmschrauben 63 gehalten ist. Die Tragstücke 62 tragen einen Rahmen 64, in dem einerseits ein als Walze ausgebildetes Querverteilorgan 65 und andererseits eine Umlenkwalze 66 angeordnet sind. Die Walzen 65, 66 sind in Längsschlitzen 67, 68 verschiebbar und feststellbar geführt. Der Rahmen 64 ist in den Tragstücken 62 schwenk- und feststellbar gelagert, wozu Klemmschrauben 69 dienen. Im oberen Ende der Tragstücke 62 ist eine Spannrolle 70 verstellbar gelagert, mit der ein über die Walzen 65, 66 umlaufendes endloses Band 71 gespannt werden kann. Dieses Band 71 wird synchron zur Geschwindigkeit des nicht dargestellten eigentlichen Transportbandes angetrieben, so dass die obere Deckschicht 72 mit der gleichen Geschwindigkeit transportiert wird wie die untere Deckschicht 55.

*Beispiel*

Benutzt wurde eine Doppelbandanlage des Herstellers Maschinenfabrik Hennecke GmbH, St. Augustin 1, Bundesrepublik Deutschland. Diese Maschine war mit einem feststehenden Mischkopf ausgestattet und ihr Aufbau entspricht im wesentlichen demjenigen gemäss Fig. 2, wobei jedoch die untere Deckschicht über den Aufgabetisch geführt und in der Knickstelle durch Saugwirkung gehalten wurde. Die Fördergeschwindigkeit betrug 10 m/min. Es wurden 14 l/min Reaktionsgemisch aufgegeben. Die Arbeitsbreite betrug 1,25 m. Es sollten Sandwichbahnen mit beidseitigen, 0,1 mm dicken Papierdeckschichten, zwischen denen ein Hartschaumkern angeordnet ist, hergestellt werden. Die Gesamtdicke der Bahnen sollte 40 mm betragen. Der Aufgabetisch wurde auf 15°C gekühlt, der Gleittisch auf ca. 30°C erhitzt.

Es wurde folgendes Reaktionsgemisch verwendet.

| | | |
|---|---|---|
| 40 | Gew.-Teile | eines Succrose-Äthers mit der OH-Zahl 520, |
| 12 | » | eines äthylendiamin-gestarteten Polyäthers mit der OH-Zahl 480, |
| 12 | » | Glycerin |
| 1,8 | » | Wasser |
| 1,5 | » | eines Silikon-Stabilisators (Type OS 710 der Bayer AG, Leverkusen, BRD) |
| 1,5 | » | Dimethylcyclohexylamin |
| 45 | » | Trifluorchlormethan |
| 201 | » | rohes 4,4-Diphenylmethandiisocyanat mit Isomeranteilen (Desmodur® 44V20 der Bayer AG, Leverkusen, BRD). |

Die Reaktionszeit dieses Gemisches betrug 120 Sekunden, wobei auf die Startzeit 10 Sekunden entfielen, auf die Abbindezeit 20 Sekunden und auf die Aushärtungszeit 90 Sekunden. (Definitionen gemäss «Kunststoffhandbuch» Band VIII, «Polyurethane», Vieweg und Höchtlen, Carl-Hanser-Verlag, München, 1966).

*Versuch 1:*

Die Gemischaufgabestelle befand sich 1,25 m vor der als Querverteilorgan dienenden Walze von 100 mm Durchmesser. Der Egalisierspalt hat eine Höhe von 1,5 mm. Ein geneigter Aufgabetisch war nicht vorhanden. Es wurden völlig unbrauchbare Sandwichbahnen produziert, da das Reaktionsgemisch bis zum Aufschäumen nur auf eine Breite von 100 mm verteilt werden konnte.

*Versuch 2:*

Anstelle eines Querverteilorgans war ein Aufgabetisch vorgesehen, der eine Neigung von 8° aufwies. Auch hier ergab sich eine unzureichende Querverteilung, die zu unbrauchbaren Sandwichbahnen führte.

*Versuch 3:*

Er stellte eine Kombination des Querverteilorgans gemäss Versuch 1 mit dem geneigten Aufgabetisch gemäss Versuch 2 dar. Das Gemisch wurde zwar vollständig über die Breite verteilt; die Kantenausbildung war jedoch unzureichend und die Dickenabweichung zu gross. Über die Breite gesehen ergaben sich folgende Dicken: linke Randzone 38 mm, bei 1/4 Breite 40 mm, bei 1/2 Breite (Mittel) 41 mm, bei 3/4 Breite 40 mm, rechte Randzone 36 mm. Die Dickentoleranz liegt also bei 10%. Die mittlere Druckfestigkeit des Produktes betrug 0,24 MPa (gemessen nach DIN 53 421). Die Rohdichte betrug 30 kg/m³.

*Versuch 4:*

Er entsprach im wesentlichen dem Versuch 3, jedoch mit dem Unterschied, dass das als Kufe ausgebildete Querverteilorgan über dem geneigten Aufgabetisch angeordnet war, und zwar derart kurz vor der Knickstelle, dass für die obere Deckschicht hinter der Kufe keine besonderen Führungsorgane erforderlich waren. Die Aufgabestelle war 0,50 m von der Kufe entfernt. Das gefertigte Produkt besass in der linken Randzone eine Dicke von 39,5 mm, bei 1/4, 1/2 und 3/4 Breite jeweils 40 mm und die rechte Randzone besass eine Dicke von 40,1 mm. Damit liegt die Dickentoleranz unter 2%. Die Druckfestigkeit des Produktes betrug 0,29 MPa, die Rohdichte 30 kg/m³.

**Patentansprüche**

1. Einrichtung zum kontinuierlichen Herstellen von Schaumstoffblöcken oder Schaumstoffbahnen, die gegebenenfalls mit Deckschichten kaschiert sind, aus einem flüssigen Reaktionsgemisch; bestehend aus

a) einer Förderfläche (1, 33, 51) für den sich bildenden Schaumstoffkörper, über der einlaufseitig

ba) ein gegenüber der Förderfläche (1, 33, 51) geneigter Aufgabetisch (5, 31, 52) und

bb) ein Querverteilorgan (12, 42, 65) für das flüssige Reaktionsgemisch vorgesehen sind, und einer über dem Aufgabetisch (5, 31, 52) angeordneten

c) Gemischaufgabevorrichtung (29), dadurch gekennzeichnet, dass das Querverteilorgan (12, 42, 65)

da) über dem geneigten Aufgabetisch (5, 31, 52) angeordnet ist und

db) mit dessen Oberfläche einen Spalt bildet.

2. Einrichtung nach Anspruch 1, dadurch gekennzeichnet, dass der zwischen Querverteilorgan (12, 42, 65) und Aufgabetisch (5, 31, 52) gebildete Spalt — über die Tischbreite gesehen — unterschiedliche Weite aufweist.

3. Einrichtung nach den Ansprüchen 1 oder 2, dadurch gekennzeichnet, dass in Förderrichtung hinter dem Querverteilorgan (12, 42, 65) eine Folienführungsvorrichtung (10; 37; 59) vorgesehen ist.

**Revendications**

1. Dispositif pour la fabrication continue de blocs ou de feuilles de matière alvéolaire qui sont éventuellement contreplaqués par des couches de revêtement, à partir d'un mélange réactionnel liquide, et constitué par:

a) une surface de transport (1, 33, 51), pour le corps de matière alvéolaire qui se construit, au-dessus de laquelle sont prévus dans le sens d'avancement

ba) une table de chargement (5, 31, 52) inclinée par rapport à la surface de transport (1, 33, 51) et

bb) un organe transversal de répartition (12, 42, 65) destiné au mélange réactionnel liquide, ainsi que par

c) un dispositif de chargement du mélange (29) disposé au-dessus de la table de chargement (5, 31, 52), caractérisé an ce que l'organe transversal de répartition (12, 42, 65)

da) est disposé au-dessus de la table de chargement inclinée (5, 31, 52) et

db) forme un interstice avec la surface de celle-ci.

2. Dispositif selon la revendication 1, caractérisé en ce que l'interstice formé entre l'organe transversale de répartition (12, 42, 65) et la table de chargement (5, 31, 52) présente, vu au-dessus de la largeur de la table, une largeur distincte.

3. Dispositif selon les revendications 1 ou 2, caractérisé en ce qu'on prévoit un dispositif de guidage de feuilles (10, 37, 59) dans le sens d'avancement derrière l'organe transversal de répartition (12, 42, 65).

**Claims**

1. An apparatus for the continuous production of foam blocks or foam webs, which are optionally covered with surface layers, from a liquid reaction mixture; consisting of

a) a conveying surface (1, 33, 51) for the foam body being formed, above which on the inlet side

ba) a feed table (5, 31, 52) which is inclined in relation to the conveying surface (1, 33, 51) and

bb) a transverse distributing member (12, 42, 65) for the liquid reaction mixture are provided, and a

c) mixture feed device (29) arranged above the feed table (5, 31, 52), characterised in that the transverse distributing member (12, 42, 65)

da) is arranged above the inclined feed table (5, 31, 52) and

db) forms a gap with the surface thereof.

2. An apparatus according to claim 1, characterised in that the gap formed between the transverse distributing member (12, 42, 65) and the feed table (5, 31, 52) — as viewed over the breadth of the table — is of differing width.

3. An apparatus according to claims 1 or 2, characterised in that a foil guide device (10; 37; 59) is provided downstream of the transverse distributing member (12, 42, 65) in the direction of conveyance.

FIG.1

FIG.2